# EUROPÄISCHE PATENTSCHRIFT

(11) **EP 2 209 960 B1**
(45) Veröffentlichungstag und Bekanntmachung des Hinweises auf die Patenterteilung: **27.06.2012**
(21) Anmeldenummer: 08805111.5
(22) Anmeldetag: 07.10.2008
(51) Int. Cl.: B60R 7/06, E05B 47/02, E05B 65/12, B60R 21/205

(54) **VERSCHLUSS FÜR EIN STAUFACH EINES KRAFTFAHRZEUGS**
CLOSURE FOR A STORAGE COMPARTMENT OF A MOTOR VEHICLE
FERMETURE POUR UN COMPARTIMENT DE RANGEMENT D'UN VÉHICULE AUTOMOBILE

(30) Priorität: 14.11.2007 DE 102007000899
(43) Veröffentlichungstag der Anmeldung: 28.07.2010
(73) Patentinhaber: Faurecia Innenraum Systeme GmbH, 76767 Hagenbach (DE)
(72) Erfinder: SIELHORST, Bernhard, 33378 Rheda-Wiedenbrück (DE); CHEVROTON, Vincent, F-67610 La Wantzenau (FR); PIGNON, Christophe, F-25200 Montbéliard (FR)
(74) Vertreter: Richardt Patentanwälte GbR
(86) Internationale Anmeldenummer: PCT/EP2008/063405
(87) Internationale Veröffentlichungsnummer: WO 2009/062791

(56) Entgegenhaltungen:
- EP-A- 0 499 419
- DE-A1- 3 508 338
- DE-A1- 10 326 416
- DE-A1- 19 617 403
- DE-A1- 19 736 561
- US-A- 5 613 716
- US-A1- 2004 135 353

## Beschreibung

Die Erfindung betrifft einen Verschluss für ein Staufach eines Kraftfahrzeugs, ein Staufach und ein Verfahren zum Entriegeln des Staufachs.

Aus dem Stand der Technik sind Staufächer für ein Kraftfahrzeug bekannt. Diese Staufächer weisen typischerweise einen Deckel auf, der mittels eines Verschlusses ver- und entriegelt werden kann. Ein Beispiel für ein Staufach ist ein Handschuhkasten. Der vom Stand der Technik her bekannte Handschuhkastenverschluss umfasst typischerweise einen am Handschuhkasten angebrachten Bolzen, der mittels einer Rückstellfeder in eine Aussparung am Handschuhkasten gedrückt wird, so dass der Handschuhkasten durch den Bolzen bei geschlossenem Deckel verriegelt wird. Ferner ist der Bolzen über beispielsweise ein mechanisches Gestänge mit einem an der Außenseite des Deckels angebrachten Griff verbunden. Durch Ziehen am Griff kann damit der Bolzen aus der Aussparung gezogen werden, so dass der Handschuhkasten entriegelt wird.

Aus dem Stand der Technik sind auch Handschuhkästen bekannt, die mittels eines Elektromotors, der ein Schneckengetriebe antreibt, entriegelbar sind. Das Schneckengetriebe verkürzt oder verlängert einen Seilzug oder einen Bowdenzug, der wiederum über ein Stangensystem Verriegelungselemente, wie etwa Verschlussbolzen so bewegt, dass der Handschuhkasten entriegelt wird. Nachteilig ist, dass der Elektromotor im Handschuhkastengehäuse untergebracht werden muss. Da der Elektromotor relativ groß ist, schränkt dieser die Designmöglichkeiten von Handschuhkästen ein. Der Motor verursacht auch im Betrieb akustische Geräusche, die für einen Fahrzeug-Insassen deutlich wahrnehmbar sind. Die Frequenzen dieser akustischen Geräusche liegen im Bereich zwischen 1 und 3 kHz und sind deshalb nicht nur deutlich wahrnehmbar sondern auch äußerst lästig und störend.

Die DE 196 17 403 A1 offenbart einen Verschluss für einen Handschuhkastendeckel eines Kraftfahrzeuges. Der Verschluss weist einen Elektromagneten auf, in dessen Längsbohrung ein Anker eingreift. An diesen schließt sich ein Arretierelement an, das in Verriegelungslage des Handschuhkastendeckels durch die Wirkung einer Druckfeder in eine Aufnahmebohrung eingreift. Bei Erregung des Elektromagneten bzw. der Spule des Elektromagneten wird der Anker in die Längsbohrung des Elektromagneten gezogen, so dass das Arretierelement aus der Aufnahmebohrung gezogen wird und dadurch der Handschuhkasten entriegelt wird. Dabei tritt das Problem auf, dass durch die Bewegung des Ankers bzw. des damit verbundenen Arretierelements sowohl beim Verfahren des Ankers von der Verriegelungsposition des Arretierelements in die Entriegelungsposition als auch in umgekehrter Richtung für einen Insassen deutlich wahrnehmbare Geräusche in Form eines Klackens hörbar sind.

Die US 5,613,716 offenbart eine geräuschminimierte Handschuhkasten-Entriegelung, die auf einer Optimierung einer Aktuatoransteuerung beruht. Der Aktuator dient hierbei zur Betätigung einer Arretierung für ein Türschließsystem eines Kraftfahrzeugs.

Die KR 10 2001 03 7915 offenbart einen Handschuhkasten mit einer Ver- und Entriegelungseinheit zum Öffnen und Schließen des Handschuhkastens. Die DE 103 26 416 A1 offenbart eine Verriegelungsvorrichtung und ein Verriegelungsverfahren für ein bewegliches Element, insbesondere eine Klappe oder Schublade.

Die DE 196 17 403 A1 offenbart einen Handschuhkastendeckel eines Kraftfahrzeugs, wobei im Armaturenbrett ein Elektromagnet eingesetzt ist, in dessen Längsbohrung ein Führungsabschnitt eingreift. An diesen schließt sich ein Arretierbolzen an, der in Verriegelungslage des Handschuhkastendeckels durch die Wirkung einer Druckfeder in eine Aufnahmebohrung eingreift. Bei Erregung des Elektromagneten wird der Führungsabschnitt in die Längsbohrung des Elektromagneten gezogen, sodass sich der Arretierbolzen außerhalb des Querabschnitts des Handschuhkastendeckels befindet und dieser dadurch in die Öffnungslage geschwenkt werden kann.

Die EP 0 499 419 A2 offenbart, dass die Stromaufnahmecharakteristik des Elektromagneten dahingehend verwendet werden kann, um festzustellen, ob eine Bewegung des Ankers des Elektromagneten stattgefunden hat oder nicht.

Die DE 35 08 338 A1 offenbart eine Einrichtung zum elektrischen Betätigen eines Garagentors. Ziel der Erfindung, wie sie in Dokument 3 geoffenbart wird, ist die Schaffung einer Einrichtung zum elektrischen Betätigen eines Garagentors, wobei diese Einrichtung in möglichst wirtschaftlicher Weise arbeiten soll. Dazu werden Elektromagnetverriegelungen zum Entriegelungsvorgang zunächst ein höherer Speisestrom zum Einziehen der Verriegelungsstifte und danach ein niedrigerer Haltestrom zugeführt.

Aufgabe der Erfindung ist es, einen verbesserten Verschluss für ein Staufach eines Kraftfahrzeugs, ein verbessertes Staufach und ein verbessertes Verfahren zur Entriegelung des Staufachs zu schaffen.

Die der Erfindung zugrunde liegenden Aufgaben werden jeweils mit den in den unabhängigen Patentansprüchen angegeben Merkmalen gelöst. Erfindungsgemäße Ausführungsformen werden in den abhängigen Patentansprüchen angegeben.

Erfindungsgemäß wird ein Verschluss für ein Staufach eines Kraftfahrzeugs geschaffen, wobei der Verschluss mindestens einen Elektromagneten umfasst. Der Elektromagnet weist einen Anker auf, wobei der Anker durch Erregung des Elektromagneten bewegbar ist. Eine Bewegung des Ankers ist zumindest auf ein Arretierelement übertragbar, wobei sich das mindestens eine Arretierelement aufgrund einer Rückstellkraft einer Feder bei unbestromten Elektromagneten in einer Verriegelungsposition für das Staufach befindet. Ferner weist der Verschluss Mittel zur Erzeugung eines elektrischen Stroms zur Erregung des Elektromagneten auf. Außerdem weist der Verschluss Mittel zur Messung des zur Erregung des Elektromagneten verwendeten elektrischen Stromflusses auf, wobei die Mittel zur Erzeugung des Stromes dazu ausgebildet sind, den elektrischen Strom so zu steuern, dass nach Einschalten des Stromes nach Messung des Erreichens eines Maximalstromes und anschließendem Unterschreiten dieses Maximalstromes der Strom auf einen vorgegebenen Minimalwert reduziert wird.

Bei dem Elektromagneten handelt es sich typischerweise um einen Hubmagnet, bei dem der Anker längs einer Längsbohrung des Elektromagneten beweglich ist. Der Anker besteht dabei aus einem magnetischen Werkstoff oder weist zumindest einen magnetischen Kern, wie etwa einen Weicheisenkern auf. Bei Bestromung des Magneten mit elektrischem Strom wird ein Magnetfeld erzeugt, wodurch eine Kraft auf den Anker ausgeübt wird, sodass dieser längs der Längsbohrung des Elektromagneten bewegt werden kann. Der Anker ist mit einem oder mehreren Arretierelementen gekoppelt, sodass eine Bewegung des Ankers auf das Arretierelement oder auf die Arretierelemente übertragen werden kann. Ferner sind der Anker und/oder die Arretierelemente mit einer oder mehreren Federn beaufschlagt, sodass sich die Arretierelemente aufgrund der Rückstellkräfte der Federn bei unbestromten Elektromagneten in der Verriegelungsposition für das Staufach befinden. Bei der Erregung des Elektromagneten mit dem elektrischen Strom wird ein ausreichend starkes Magnetfeld erzeugt, sodass der Anker in der Längsbohrung des Magneten entgegen der Rückstellkräfte der Feder bewegt werden kann, und somit die mit dem Anker gekoppelten Arretierelemente in die Entriegelungsposition gebracht werden können.

Dabei wird zunächst ein möglichst kleiner Energieeintrag in das zu bewegende System, bestehend aus dem Elektromagneten, dem Anker und/oder dem Arretierelement, eingebracht. So ist es zum Beispiel möglich, kontinuierlich zur Erregung des Elektromagneten eine verwendete elektrische Spannung zu erhöhen. Dies resultiert automatisch auch in einer kontinuierlichen Erhöhung des elektrischen Stromflusses welcher durch den Elektromagneten fließt. In dem Augenblick, wenn sich der Anker in Bewegung setzt, nimmt bei gleich bleibender Spannung der zur Erregung des Elektromagneten benötigte Strom spontan ab. Dies bedeutet, dass mit dem Einsetzen des Bewegens des Ankers ein maximaler Stromfluss erreicht wird, welcher anschließend aufgrund der Bewegung des Ankers unterschritten wird. Nun wird nach Detektion dieses Unterschreitens des bisher aufgebrachten maximalen Stromes der zur Erregung des Elektromagneten verwendete Strom auf einen Minimalwert reduziert. Dieser Minimalwert ist dabei genau so dimensioniert, dass ein Halten des Ankers in seiner augenblicklichen Position entgegen der auf den Anker wirkenden Federkräfte möglich ist. Somit schlägt der Anker bzw. das Arretierelement weder aufgrund zu hoher vorhandener Ströme und seines Schwungs gegen das Gehäuse des Elektromagneten, noch wird der Anker aufgrund der Rückstellkräfte der Federn in seine Ausgangslage zurückkatapultiert. Aus diesem Grund entstehen beim Öffnen des Verschlusses für das Staufach keine oder zumindest fast keine Geräusche, wenn der Anker bzw. die Arretierelemente ihre Entriegelungsposition erreichen.

Nach einer Ausführungsform der Erfindung ist der elektrische Strom zur Erregung des Elektromagneten so steuerbar, dass der elektrische Strom über einen ersten Zeitraum bis zum Erreichen des gemessenen Maximalstromes stetig steigerbar ist. Der Strom zur Erregung des Elektromagneten wird somit nicht abrupt eingeschaltet und erhöht. Vielmehr wird der Strom langsam über den ersten Zeitraum erhöht, so lange, bis der elektrische Strom ausreichend ist, damit die mit dem Anker gekoppelten Arretierelemente in Bewegung gesetzt werden, um somit eine Entriegelung zu erzielen.

Nach einer weiteren Ausführungsform der Erfindung ist der Strom auf dem vorgegebenen Minimalwert für einen zweiten Zeitraum reduzierbar, wobei sich das Arretierelement über den zweiten Zeitraum hinweg in einer Entriegelungsposition für das Staufach befindet. Dies hat den Vorteil, dass über den gesamten zweiten Zeitraum hinweg zum Beispiel der Deckel eines Staufaches genügend Zeit hat, um aus der Verschlussposition in eine Öffnungsposition sanft überzugleiten.

Nach einer weiteren Ausführungsform der Erfindung ist der elektrische Strom nach Ablauf des zweiten Zeitraums so steuerbar, dass er über einen dritten Zeitraum hin stetig verringert wird. Durch diese stetige Verringerung über den dritten Zeitraum hinweg, wird der Anker aufgrund der Rückstellkräfte der Federn nicht in die Ausgangslage zurückkatapultiert, sondern in einer relativ langsam verlaufenden Bewegung in seine Ausgangslage gebracht. Deshalb entstehen auch hier keine oder zumindest fast keine Geräusche, wenn der Anker bzw. die Arretierelemente die Verriegelungsposition erreichen, da sie aufgrund der langsamen Bewegung nirgends deutlich hörbar aufschlagen. So werden für einen Insassen des Kraftfahrzeugs nach außen deutlich hörbare Geräusche beim Betätigen des Verschlusses, insbesondere nachdem das Handschuhfach bereits geöffnet ist, vermieden. Ziel ist es dabei, dass insbesondere vor dem Hintergrund der Geräuschkulisse eines sich im Betrieb befindlichen Fahrzeuges die Lautstärke des Anschlaggeräuschs unter die Wahrnehmungsgrenze eines Insassen fällt.

Es sei darauf hingewiesen, dass mit dem erfindungsgemäßen Verschluss die mechanische Haltbarkeit eines solchen Verschlusses beträchtlich gegenüber Verschlüssen, wie sie nach dem Stand der Technik bekannt sind, erhöht wird. Durch die Reduzierung der verwendeten Ströme auf minimal notwendige Ströme zur Bewegung und Halterung des Ankers in einer vorbestimmten Position werden die mechanischen Teile weniger stark beansprucht. Ferner findet kein Aufschlagen von mechanischen Teilen auf den Elektromagneten selbst bzw. auf einen Handschuhkasten statt, da durch die besondere Regelung der verwendeten Ströme ein sanftes Hin- und Hergleiten des Ankers bzw. der Arretierelemente gewährleistet ist. Außerdem hat der Verschluss gemäß der vorliegenden Erfindung den weiteren Vorteil, dass eine Bewegung des Aktuators bzw. des Ankers allein durch den hierzu notwendigen Stromverlauf detektiert werden kann. Damit entfällt der Aufwand zur Installation zusätzlicher Sensorkomponenten zur Detektion einer erfolgreichen Bewegung des Aktuators.

Nach einer Ausführungsform der Erfindung ist der elektrische Strom in einem exponentiellen Verlauf oder in einem linearen Verlauf während des ersten Zeitraums steigerbar und/oder während des dritten Zeitraums verringerbar. Beispielsweise wird die elektrische Spannung und damit verbunden der elektrische Strom in einem linearen oder exponentiellen Verlauf erhöht oder erniedrigt. Bei der Erhöhung des elektrischen Stromes werden dabei die elektrische Stromstärke und/oder die elektrische Spannung von Null bis zu einem Sollwert, der für die Bewegung des Ankers notwendig ist, erhöht. Entsprechend werden bei der Verringerung des elektrischen Stroms die Stromstärke und/oder die Spannung vom Sollwert während des dritten Zeitraums auf Null reduziert. Es sei hier jedoch darauf hingewiesen, dass vorzugsweise ausschließlich mit einer Stromsteuerung gearbeitet wird, da der erfindungsgemäße Verschluss entsprechende Mittel zur Steuerung des elektrischen Stroms und auch entsprechende Mittel zur Messung des verwendeten elektrischen Stromflusses aufweist.

Nach einer Ausführungsform der Erfindung umfasst der erfindungsgemäße Verschluss ferner Mittel zur Bestimmung des vorgegebenen Minimalwerts des Stroms, wobei der Minimalwert des Stroms durch das Verhältnis zwischen dem gemessenen Maximalstrom und dem gemessenen Wert des Unterschreitens des Maximalstromes abhängt. Dabei ist vorzugsweise der vorgegebene Minimalwert über eine Tabelle bestimmbar, wobei in der Tabelle der Minimalwert des Stromes dem Verhältnis zwischen dem gemessenen Maximalstrom und dem gemessenen Wert des Unterschreitens des Maximalstromes zugeordnet ist. Somit wird die prozentuale Minimierung des Stromes nach dem Maximum ermittelt und der minimal benötigte Strom durch Vergleich dieser prozentualen Minimierung mit einem tabellierten Vergleichswert bestimmt.

Alternativ ist es auch möglich, nach Detektion des Erreichens des Maximalstroms und Unterschreiten desselben die Absenkung auf den vorgegebenen Minimalwert dann durchzuführen, wenn das Verhältnis des aktuell gemessenen Stromwertes zum gemessenen Maximalstrom einen vorgegebenen Wert unterschreitet. So könnte Beispielsweise dann eine Absenkung auf den vorgegebenen Minimalwert stattfinden, wenn der aktuell gemessene Stromwert nur noch 95% des maximal gemessenen Stromwertes entspricht.

Nach einer Ausführungsform der Erfindung liegt der erste Zeitraum zwischen 5 und 100 ms, der zweite Zeitraum zwischen 0 und 300 ms und der dritte Zeitraum zwischen 50 und 500 ms.

Nach einer Ausführungsform der Erfindung weist der Verschluss einen Sensor für jeden der mindestens einen Elektromagnete auf, wobei mit dem Sensor detektierbar ist, ob sich der Anker des Elektromagneten in einer Position befindet, die der Verriegelungsposition des entsprechenden Arretierelementes entspricht. Bei dem Sensor kann es sich beispielsweise um einen Hall-Sensor handeln, der so am Elektromagneten angebracht ist, dass damit bei abgeschaltetem Magneten das Magnetfeld des Ankers detektierbar ist, wenn sich der Anker in der Position befindet, die der Verriegelungsposition der mit dem Anker verbundenen Arretierelemente entspricht. Wie bereits jedoch oben angemerkt, wird vorzugsweise auf solche Sensoren verzichtet, da über den Verlauf der zur Bewegung des Ankers aufgewendeten Ströme auf eine erfolgte Bewegung des Ankers und damit auf eine Ankerposition schließbar ist.

Nach einer Ausführungsform der Erfindung weist der Verschluss einen Sensor für jedes Arretierelement auf, wobei mit dem Sensor detektierbar ist, ob bei geschlossenem Staufach das entsprechende Arretierelement in der Verriegelungsposition ist.

Nach einer Ausführungsform der Erfindung ist jeweils ein Arretierelement am Anker von jeweils einem Elektromagneten fixiert. Damit können die zur Realisierung eines Verschlusses notwendigen Bauteile auf ein Mindestmaß reduziert werden, da ein Gestänge bzw. Zahnstangenelemente nicht mehr benötigt werden.

Nach einer weiteren Ausführungsform der Erfindung weist der Verschluss einen Elektromagneten, zwei Zahnstangenelemente und ein Zahnrad auf, wobei jeweils ein Arretierelement an einem Ende jedes Zahnstangenelements bewegbar ist, wobei das Zahnrad vom Anker des Elektromagneten bewegbar ist, wobei eine Bewegung des Zahnrads auf die Zahnstangenelemente übertragbar ist und wobei durch die Bewegung die Arretierelemente von der Verriegelungsposition in die Entriegelungsposition bewegbar sind.

Nach einer weiteren Ausführungsform der Erfindung weist der Verschluss Dämpfungsmittel auf. Die Dämpfungsmittel sind zur Dämpfung einer Bewegung des Ankers und der Arretierelemente vorgesehen. Die Dämpfungsmittel dienen zur Dämpfung einer Bewegung des Ankers bzw. der Arretierelemente bei einer entsprechenden Bewegung der Arretierelemente bzw. des Arretierelements von der Entriegelungsposition in die Verriegelungsposition. Ebenso ist es möglich, die Dämpfungsmittel dazu einzusetzen, bei einer Bewegung des Arretierelements von der Verriegelungsposition in die Entriegelungsposition ein eventuelles Aufschlagen des Arretierelements auf zum Beispiel das Gehäuse des Elektromagneten abzudämpfen bzw. zu verhindern. Jedoch wird vorzugsweise ein solches Aufschlagen schon dadurch verhindert, dass nach Erreichen des Maximalstroms und anschließendem Unterschreiten dieses Maximalstroms der Strom so auf einen vorgegebenen Minimalwert reduziert wird, dass ein weiteres Bewegen des Ankers und damit ein Aufschlagen des Arretierelements auf das Gehäuse des Elektromagneten wirkungsvoll verhindert wird.

Bei dem Dämpfungsmittel handelt es sich zum Beispiel um PE-Schaumdämpfer. Die Dämpfungsmittel können dabei in der gesamten Antriebskette vom Anker bis zur Verriegelungsspitze eingefügt werden.

Nach einer Ausführungsform der Erfindung wird der Elektromagnet von Mitteln zur Schalldämpfung eingefasst. Damit können die bei Betätigung des Elektromagneten verursachten Geräusche, die über dem gesamten hörbaren Frequenzbereich liegen, gedämpft werden, sodass für einen Kraftfahrzeuginsassen die Betätigung des Elektromagneten kaum hörbar ist. Beispielsweise handelt es sich bei den Schalldämpfungsmitteln ebenfalls um PE-Schaumdämpfer. Beispielsweise wurde an einem Handschuhkasten-Prototypen mit einem erfindungsgemäßen Verschluss im Abstand von 740 mm mit einem Kunstkopf ein Schalldruck unter 55 dB(A) gemessen.

Nach einer Ausführungsform der Erfindung handelt es sich beim dem Elektromagneten um einen Doppelhub-Aktuator. Damit werden ein erster Elektromagnet für eine Vorwärtsbewegung des Ankers und ein zweiter Elektromagnet für eine Rückwärtsbewegung des Ankers kinematisch gekoppelt eingesetzt. Dabei wird die Feder zur Rückwärtsbewegung des Ankers durch den zweiten Elektromagnet ersetzt, womit während dem dritten Zeitraum eine Bestromung des zweiten Elektrogmagneten so optimiert erfolgt, dass ein Aufschlagen des Ankers bei der durch den Elektromagneten verursachten Rückwärtsbewegung auf das Gehäuse des Elektromagneten verhindert wird.

In einem weiteren Aspekt betrifft die Erfindung ein Staufach für ein Kraftfahrzeug mit einem Verschluss der oben beschriebenen Art.

In einem weiteren Aspekt betrifft die Erfindung ein Verfahren zum Entriegeln eines Staufachs. Verfahrensgemäß erfolgt dabei eine Erregung von einem Elektromagneten mit einem elektrischen Strom, wobei der Elektromagnet einen Anker aufweist, wobei der Anker des Elektromagneten mit einem oder mehreren Arretierelementen gekoppelt ist, wobei jedes Arretierelement bei unbestromtem Elektromagneten aufgrund einer Rückstellkraft einer Feder bei geschlossenem Staufach eine Verriegelungsposition durch Eingriff in Aussparungen im Staufach einnimmt, wobei durch die Erregung des Elektromagnets mit dem elektrischen Strom die Arretierelemente in eine Entriegelungsposition bewegt werden. Dabei erfolgt eine Steuerung des elektrischen Stroms so, dass nach Einschalten des Stroms nach Messung des Erreichens eines Maximalstroms und anschließendem Unterschreiten dieses Maximalstroms der Strom auf einen vorgegebenen Minimalwert des Stroms reduziert wird.

Nach einer Ausführungsform der Erfindung umfasst das Verfahren den Schritt der Steuerung des elektrischen Stromes so, dass der elektrische Strom über einen ersten Zeitraum bis zum Erreichen des gemessenen Maximalstromes stetig gesteigert wird.

Nach einer Ausführungsform der Erfindung erfolgt die Steuerung des elektrischen Stroms ferner so, dass nach Ablauf des zweiten Zeitraums der elektrische Strom über einen dritten Zeitraum hinweg stetig verringert wird.

Nach einer weiteren Ausführungsform der Erfindung umfasst das Verfahren ferner den Schritt des Bestimmens des vorgegebenen Minimalwerts des Stroms, wobei der Minimalwert des Stroms durch das Verhältnis zwischen dem gemessenen Maximalstrom um den gemessenen Wert des Unterschreitens des Maximalstroms abhängt. Vorzugsweise wird dabei der vorgegebene Minimalwert aus einer Tabelle ausgelesen, wobei in der Tabelle der Minimalwert des Stroms dem Verhältnis zwischen dem gemessenen Maximalstrom und dem gemessenen Wert des Unterschreitens des Maximalstroms zugeordnet ist.

Bevorzugte Ausführungsformen der Erfindung werden nachfolgend anhand der Zeichnungen näher erläutert.
- Fig. 1: zeigt schematisch einen Handschuhkasten,
- Fig. 2: zeigt schematisch einen Querschnitt durch einen Elektromagneten,
- Fig. 3: zeigt schematisch einen weiteren Handschuhkasten,
- Fig. 4: zeigt einen Graph, in dem der Verlauf eines zur Verwendung des erfindungsgemäßen Verfahrens zum Entriegeln eines Staufachs verwendeten Stromflusses dargestellt ist,
- Fig. 5: zeigt einen weiteren Graph, in dem die Verläufe einer berechneten und dazu entsprechend gemessenen Stromansteuerungskurve dargestellt sind,
- Fig. 6: zeigt ein Flussdiagramm, in dem Schritte des erfindungsgemäßen Verfahrens zum Entriegeln eines Staufachs dargestellt sind,
- Fig. 7: zeigt ein weiteres Flussdiagramm, in dem weitere Schritte des erfindungsgemäßen Verfahrens dargestellt sind.

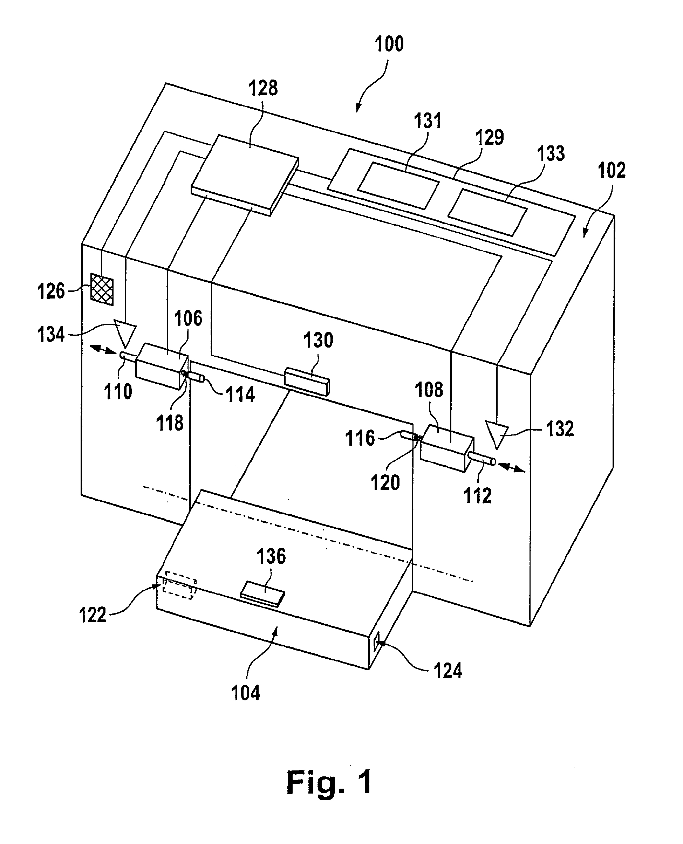

Die Figur 1 zeigt schematisch einen Handschuhkasten 100. Der Handschuhkasten 100 weist ein Gehäuse 102 und einen Deckel 104 auf. Im Gehäuse 102 sind Elektromagnete 106 und 108 angeordnet. Die Elektromagnete 106 und 108 weisen jeweils einen Anker 110 bzw. 112 auf, welche durch Erregung der Magnete längs einer Längsbohrung der Elektromagnete vom durch die Erregung erzeugten Magnetfeld beweglich sind. Die Anker 110 und 112 bestehen deshalb beispielsweise aus Weicheisen oder weisen einen Weicheisenkern auf. Das bei der Erregung der Elektromagnete von den Elektromagneten erzeugte Magnetfeld koppelt somit mit dem magnetischen Moment der Anker, wodurch eine Kraft erzeugt wird, die die Anker längs der Längsbohrung (siehe Pfeile) bewegt.

An jedem Anker 110 und 112 ist ein Arretierelement 114 bzw. 116 angebracht, das im Wesentlichen bolzenförmig ausgebildet ist. Jedes Arretierelement 114 und 116 ist dabei von einer Feder 118 bzw. 120 beaufschlagt, die das Arretierelement bei unbestromtem Elektromagneten in eine Verriegelungsposition drückt, sodass bei geschlossenem Deckel 104 die Arretierelemente 114 und 116 in Aussparungen 122 und 124 im Deckel 104 eingreifen und der Handschuhkasten 100 somit verriegelt ist.

Befinden sich die Arretierelemente 114 und 116 in Verriegelungspositionen, dann befinden sich die Anker 110 bzw. 112 nicht in den hier gezeigten Positionen, sondern sie sind möglichst weit im entsprechenden Elektromagneten, d.h. bis zu einem der Rückstellkraft entgegenstehenden Anschlag in einer Längsbohrung des Magneten versenkt.

Im Handschuhkastengehäuse 102 sind ferner ein Betätigungsschalter 126 und eine elektrische Schaltung 128 (zum Beispiel ein integrierter Schaltkreis) angebracht. Mit der elektrischen Schaltung 128 wird ein elektrischer Strom zur Erregung der Elektromagnete 106 und 108 erzeugt. Dies kann von einem Insassen durch Drücken des Betätigungsschalters 126 initiiert werden.

Bei Bestromung der Elektromagnete 106 und 108 mit dem elektrischen Strom werden Magnetfelder in den Elektromagneten 106 und 108 erzeugt, die die Anker 110 bzw. 112 aus der Längsbohrung des entsprechenden Elektromagneten entgegen der Rückstellkraft der Feder 118 bzw. 120 drücken, bis die Anker 110 und 112 die in Figur 1 gezeigten Positionen einnehmen. Diese Positionen entsprechen dabei Entriegelungspositionen für die Arretierelemente 118 und 120. In den Entriegelungspositionen sind die Arretierelemente 114 und 116 aus den Aussparungen 122 und 124 gezogen, sodass das Staufach entriegelt wird.

Am Handschuhkastengehäuse 102 ist ferner eine Messeinheit 129 angeordnet, welche zur Messung des Stromes ausgebildet ist, welcher zur Erzeugung der Magnetfelder in den Elektromagneten 106 und 108 verwendet wird. Dabei weisen die Mittel zur Messung des Stromes unter anderem einen Speicher 131 und einen Prozessor 133 auf. Dabei kann der Speicher 131 zum Beispiel computerausführbare Instruktionen enthalten, welche vom Prozessor 133 ausgelesen und verwertet werden können, und somit eine Steuerung der elektrischen Schaltung 128 vorzunehmen. Damit kann der zum Betriebe der Elektromagnete 106 und 108 verwendete elektrische Strom geregelt werden.

Die elektrische Schaltung 128 und die Mittel zur Messung des elektrischen Stromes 129 sind nun so ausgebildet, dass ein elektrischer Strom zur Erregung der Elektromagneten 106 und 108 für einen ersten Zeitraum bereitgestellt wird. Dabei wird der bereitgestellte elektrische Strom über den ersten Zeitraum bis zum Erreichen eines Maximalstromes stetig gesteigert. Der Maximalstrom ist erreicht, wenn bei einer gegebenen Spannung aufgrund einer einsetzenden Bewegung der Anker 110 bzw. 112 der Strom schlagartig abfällt. Daraus ergibt sich ein Stromwert, der maximal geflossen ist, als auch ein Stromwert des Unterschreitens dieses Maximalstroms.

Es sei angemerkt, dass hierzu vorzugsweise die zum Betrieb der Elektromagnete 106 und 108 verwendete elektrische Spannung kontinuierlich erhöht wird. Während diesem Erhöhen wird nun der Stromfluss gemessen, welcher durch die Elektromagnete 106 und 108 fließt. Erreicht nun die Spannung jenen kritischen Punkt, an welchem eine Bewegung der Anker 110 bzw. 112 einsetzt, fällt der bis dahin stetig zunehmende elektrische Strom schlagartig selbständig auf einen Wert ab, wobei nun der bis dahin gemessene Maximalstrom mit dem nun gemessenen Wert des Unterschreitens dieses Maximalstroms ins Verhältnis gesetzt werden kann. Somit wird nun unter Verwendung des Prozessors 133 die prozentuale Minimierung des Stroms nach dem Maximum ermittelt und für diese prozentuale Minimierung ein so genannter "Minimalwert des Stroms" bestimmt. Dabei erfolgt die Bestimmung anhand einer Tabelle, welche in dem Speicher 131 enthalten ist. In dieser Tabelle sind verschiedenen prozentualen Minimierungen des Stroms nach einem Maximum entsprechende Minimalwerte des Stroms zugeordnet.

Eine solche Tabelle kann beispielsweise experimentell erhalten werden, indem bei verschiedenen Temperaturbedingungen und geometrischen Toleranzeinflüssen das Verhalten des Ankers bei verschiedenen Bestromungen des Elektromagneten ermittelt wird, um daraus die Parameter für den prozentualen Stromabfall festzulegen.

Nun erfolgt eine Stromversorgung der Elektromagnete 106 und 108 mit diesem ermittelten Minimalwert des Stromes. Dies hat zur Folge, dass die Anker 110 bzw. 112 entgegen der Rückstellkraft der Federn 118 bzw. 120 mit einem Minimum an elektrischem Strom bestromt werden, sodass die Anker 110 bzw. 112 gerade unbewegt in der Entriegelungsposition gehalten werden. Dieses Halten erfolgt dabei über einen zweiten Zeitraum, wobei sich das Arretierelement 118 bzw. 120 über diesen zweiten Zeitraum hinweg in der Entriegelungsposition befinden. Dabei wird der zweite Zeitraum genau so gewählt, dass der Deckel 104 des Handschuhkastens 100 aus seiner hier nicht gezeigten senkrechten geschlossenen Position in die in der Figur 1 gezeigte geöffnete Position aufgeklappt wird. Dabei kann dieses Aufklappen durch zusätzliche Federelemente, pneumatische Dämpfer und die Schwerkraft realisiert werden.

Genau genommen reicht es aus, wenn dabei der zweite Zeitraum so gewählt wird, dass gerade eine Entriegelung der Arretierelemente 114 und 116 aus den Aussparungen 122 und 124 stattfindet. Sobald die Aussparungen 122 und 124 von den Arretierelementen 114 und 116 weggeschwenkt sind, kann der zweite Zeitraum beendet werden.

Nach Beendigung des zweiten Zeitraums wird der elektrische Strom vorzugsweise so gesteuert, dass über einen dritten Zeitraum hinweg der Strom stetig verringert wird. Würde der Strom abrupt abgeschaltet werden, dann würde auch das vom Elektromagnet 106 bzw. 108 generierte Magnetfeld abrupt ausgeschaltet. Somit würde keine Kraft mehr der Rückstellkraft der Feder 118 entgegenwirken, und die Rückstellkraft würde den Anker 110 und das Arretierelement 118 mit der maximal möglichen Beschleunigung in die Verriegelungsposition zurückkatapultieren. Dabei würde der Anker mit maximaler Wucht auf den Anschlag auftreffen, der in der Verriegelungsposition der Rückstellkraft entgegenwirkt. Dieses Auftreffen mit maximaler Wucht hätte zur Folge, dass dabei ein relativ lautes Geräusch entsteht. Indem nun der Strom über den dritten Zeitraum hinweg abgeschaltet wird, wird die vom Magnetfeld auf den Anker 110 ausgeübte Kraft langsam reduziert, weil ja auch das Magnetfeld nicht abrupt, sondern über den dritten Zeitraum hinweg stetig reduziert wird. Damit gewinnt die Rückstellkraft der Feder 114 nur langsam die Überhand. Infolgedessen wirken viel geringere Beschleunigungskräfte auf den Anker 110 und das Arretierelement 114 bzw. den Anker 112 und das Arretierelement 116, sodass diese langsam und fast ohne ein Geräusch zu verursachen in die Verriegelungsposition zurückbewegt werden.

Je nachdem, ob nun beim Entriegelungsvorgang selber ein hörbares Geräusch durch Aufschlagen des Ankers 110 und des Arretierelements beim Erreichen eines Anschlags, der die Entriegelungsposition bestimmt, erzeugt werden soll, kann nun der Stromverlauf über den ersten Zeitraum bis zum Erreichen des gemessenen Maximalstromes individuell angepasst werden. So ist es zum Beispiel möglich, individuell einem Betreiber eines Kraftfahrzeugs die Möglichkeit zu geben, sein Fahrzeug dementsprechend zu konfigurieren, dass beim Öffnen des Handschuhfachs ein entsprechendes Öffnungsgeräusch erzeugt wird oder nicht. Soll kein Öffnungsgeräusch erzeugt werden, wird der elektrische Strom über den ersten Zeitraum hinweg bis zum Erreichen des gemessenen Maximalstroms stetig gesteigert. Ist dabei diese Stromsteigerungskurve nicht zu steil, wird der Anker 110 bzw. 112 aufgrund des zusätzlichen rechtzeitigen Minimierens des zum Betrieb der Elektromagneten verwendeten Stroms auf den Minimalwert nie eine solche Beschleunigung erhalten, um daraufhin beim Erreichen eines Anschlags, der die Entriegelungsposition bestimmt, auf den Anschlag mit großer Wucht aufzutreffen, um damit ein relativ lautes Geräusch zu erzeugen. Im Gegensatz dazu kann im Falle dessen, dass ein Geräusch beim Entriegeln des Handschuhkastens gewünscht ist, die Steigerung des elektrischen Stroms über den ersten Zeitraum hinweg bis zum Erreichen des gemessenen Maximalstroms so geregelt werden, dass der Anker 110 bzw. 112 eine solch hohe Beschleunigung erfährt, dass er mit einer vordefinierten Kraft auf den Anschlag auftritt, der die Entriegelungsposition bestimmt. Es sei jedoch hier darauf hingewiesen, dass vorzugsweise in diesem Fall die stetige Steigerung des elektrischen Stroms über den ersten Zeitraum hinweg so geregelt ist, dass der Aufschlag des Ankers 110 auf den entsprechenden Anschlag kontrolliert und nur mit einer maximal solchen Kraft erfolgt, welche nötig ist, um ein entsprechendes Geräusch zu erzeugen, wodurch der Kraftfahrzeuginsasse, der den Handschuhkasten betätigt, eine akustische Rückmeldung erhält, dass der Handschuhkasten entriegelt wird.

Im Handschuhkastengehäuse 102 können ferner Hall-Sensoren 130, 132 und 134 angeordnet sein, mit denen Magnetfelder detektierbar sind. Am Deckel 104 kann beispielsweise ein Permanentmagnet 136 angebracht sein. Ist der Deckel geschlossen, so kann das vom Permanentmagnet 136 erzeugte Magnetfeld vom Hall-Sensor 130 detektiert werden. Damit lässt sich mit dem Hall-Sensor 130 feststellen, ob der Handschuhkastendeckel 104 geschlossen oder geöffnet ist.

Ferner kann mit dem Hall-Sensor 132 das Magnetfeld des Ankers 112 detektiert werden. Befindet sich das Arretierelement 116 in der Entriegelungsposition, so befindet sich der Anker 112 in einer anderen Position relativ zum Hall-Sensor 132, wie wenn sich das Arretierelement 116 in der Verriegelungsposition befindet. Deshalb detektiert der Hall-Sensor auch verschieden starke Magnetfelder, je nachdem ob sich das Arretierelement 116 in der Ver- oder Entriegelungsposition befindet. Somit kann mit dem Hall-Sensor 132 bzw. mit der elektrischen Schaltung 128, die die vom Hall-Sensor gemessenen Signale empfängt, detektiert werden, ob sich der Anker 112 und damit das Arretierelement 116 in der Entriegelungsposition oder in der Verriegelungsposition befindet. Entsprechend kann die elektrische Schaltung 128 mittels der vom Hall-Sensor 134 empfangenen Signale feststellen, ob sich der Anker 110 bzw. das Arretierelement 114 in der Verriegelungsposition oder Entriegelungsposition befindet.

Vorzugsweise wird jedoch auf die Verwendung der Hall-Sensoren 134 und 132 verzichtet. Dies ist deshalb möglich, da durch eine exakte Messung der zum Betrieb der Elektromagnete 106 und 108 verwendeten Ströme auf die aktuelle Position der Anker 110 und 112 geschlossen werden kann. Findet beispielsweise keine Bestromung statt, so ist aufgrund der mechanischen Gegebenheiten davon auszugehen, dass sich der Anker 110 bzw. 112 in der Entriegelungsposition befindet. Wird nun eine Bestromung der Elektromagnete 106 und 108 durchgeführt, so wird mit Detektion des Maximalstroms und anschließendem Unterschreiten des Maximalstroms eine Bewegung der Anker 110 bzw. 112 detektiert. Durch Analyse des Maximalstroms und des Unterschreitens des Maximalstroms lässt sich daraufhin auf die Position der Anker 110 bzw. 112 schließen. Dasselbe gilt für den zweiten Zeitraum, in welchem der Strom auf den vorgegebenen Minimalwert reduziert wird. Dieser vorgegebene Minimalwert des Stromes kann dabei durch Einstellen einer bestimmten elektrischen Spannung erzielt werden. Ziel ist, wie bereits oben angegeben, die Anker 110 bzw. 112 in einer vorgegebenen Position zu halten. Findet nun eine Rückwärtsbewegung der Anker 110 bzw. 112 in die Verriegelungsposition statt, so kann auch eine solche Bewegung durch eine Veränderung des durch die Elektromagneten 106 und 108 fließenden Stroms detektiert werden. Vorzugsweise ist jedoch der vorgegebene Minimalwert genau so dimensioniert, dass eine solche Rückwärtsbewegung der Anker 110 bzw. 112 in die Verriegelungsposition verhindert wird. Damit lässt sich zusammengefasst sagen, dass durch die Verwendung der Mittel zur Messung des Stromes bzw. der Steuereinheit 128 durch eine exakte Dimensionierung der verwendeten Ströme und einer genauen Messung der verwendeten Ströme sicher auf die aktuelle Position der Anker 110 bzw. 112 geschlossen werden kann, womit eine Verwendung der Sensoren 132 bzw. 134 überflüssig ist. Dies reduziert die Fehleranfälligkeit des Systems und es ist möglich, Herstellungskosten einzusparen.

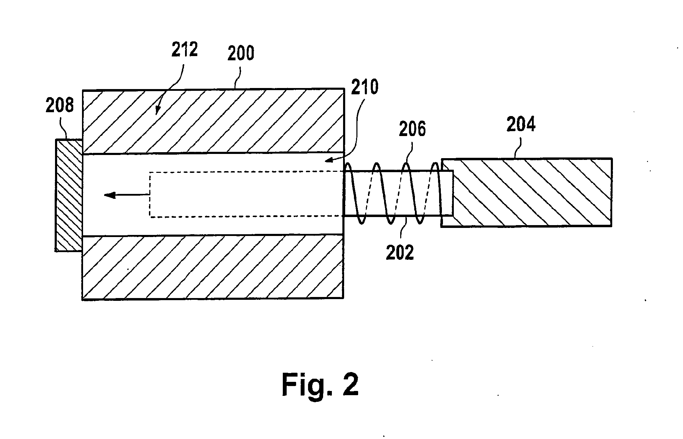

Figur 2 zeigt schematisch einen Schnitt quer durch einen Elektromagnet 200, an dessen Anker 202 ein Arretierelement 204 angebracht ist. Der Anker 202 ist dabei in einer Längsbohrung 210 des Elektromagneten angeordnet, und längs der Längsbohrung 210 beweglich. Der Anker 202 bzw. das Arretierelement 204 sind ferner von einer Feder 206 beaufschlagt, sodass das Arretierelement 204 bei ausgeschaltetem Magnet 200 maximalst möglich vom Elektromagneten entfernt ist, und damit eine Verriegelungsposition einnimmt. Im Gehäuse 212 des Elektromagneten 200 sind Spulen angeordnet, die bei Bestromung ein Magnetfeld erzeugen. Durch das Magnetfeld wird der Anker 202 und damit auch das Arretierelement 204 in Pfeilrichtung entgegen der Rückstellkraft der Feder 206 bewegt. Erfindungsgemäß wird der zur Bestromung des Magneten verwendete Strom nur langsam über den ersten Zeitraum eingeschaltet und auch wiederum langsam über den dritten Zeitraum hinweg ausgeschaltet.

Durch das langsame Einschalten gewinnt die durch das Magnetfeld auf den Anker ausgeübte Kraft nur langsam gegenüber der Rückstellkraft der Feder 206 die Überhand, sodass sich bei einem bestimmten Maximalstrom der Anker 202 bzw. das Arretierelement 204 in Bewegung setzt. In dem Augenblick, wenn sich der Anker 202 bzw. das Arretierelement 204 in Bewegung setzt, fällt der zum Treiben des Elektromagneten 200 benötigte Strom schlagartig auf einen Wert ab, welcher unterhalb des bis dahin verwendeten Maximalstroms liegt. Wird ein solcher Stromabfall detektiert, wird der zum Treiben des Elektromagneten 200 verwendete Strom auf einen Minimalwert reduziert, sodass der Anker 202 bzw. das Arretierelement 204 in einer Entriegelungsposition gehalten werden. In diesem Fall entspricht die Kraft, welche durch den Magneten in Pfeilrichtung wirkt, genau jener Kraft, die durch die Feder 206 entgegen der Pfeilrichtung wirkt. Dies entspricht einem minimalen Energieaufwand zum Halten des Ankers bzw. des Arretierelements 204.

Um nun die ruckartige Inbewegungsetzung des Ankers 202 bzw. des Arretierelements 204 beim Erreichen des Maximalstroms und anschließendem Unterschreiten des Maximalstroms so abzudämpfen, dass selbst ein Auftreffen des Ankers 202 auf die Rückwand des Elektromagneten 200 kein Geräusch verursacht, kann die Bewegung durch Dämpfungsmittel 208 (PE-Schaumstoffdämpfer), die am anderen Ende der Längsbohrung angebracht sind, weiter gedämpft werden, sodass beim Entriegeln nahezu keine Geräusche durch die Bewegung von Anker und Arretierelement verursacht werden.

Um ebenfalls keine Geräusche durch die Bewegung von Anker und Arretierelement zu verursachen, wird der Strom nur langsam und stetig über den dritten Zeitraum hinweg abgeschaltet. Damit gewinnt die Rückstellkraft der Feder 206 nur langsam die Überhand über die vom Magnetfeld auf den Anker 202 ausgeübte Kraft und der Anker und das Arretierelement werden nicht abrupt von der Federkraft in die Verriegelungsposition zurückkatapultiert. Somit wird verhindert, dass beim Anschlagen des Ankers an einen Anschlag des Elektromagneten 200 (nicht gezeigt in Figur 2) ein für den Insassen deutlich hörbares Geräusch erzeugt wird.

Da damit durch die entsprechende erfindungsgemäße Bestromungen und die Ausbildung von Elektromagnet, Anker und Arretierelement gemäß Figuren 1 und 2 die mechanischen Belastungen auf Elektromagnet, Anker, Arretierelement usw. minimiert werden können, wird somit die mechanische Stabilität des Gesamtsystems beträchtlich erhöht. Damit können insgesamt für Insassen deutlich hörbare Geräusche beim Verriegeln bzw. Entriegeln eines Handschuhfachs nahezu vollständig verhindert werden, Ist es dennoch gewünscht, entsprechende, den Fahrzeuginsassen bekannte Geräusche beim Entriegeln des Handschuhfachs zu erzeugen, bietet es sich hier an, diese Geräusche zum Beispiel über entsprechende Lautsprechersysteme und Tongeneratoren bzw. dazu alternativ über ein separates Relais zu erzeugen.

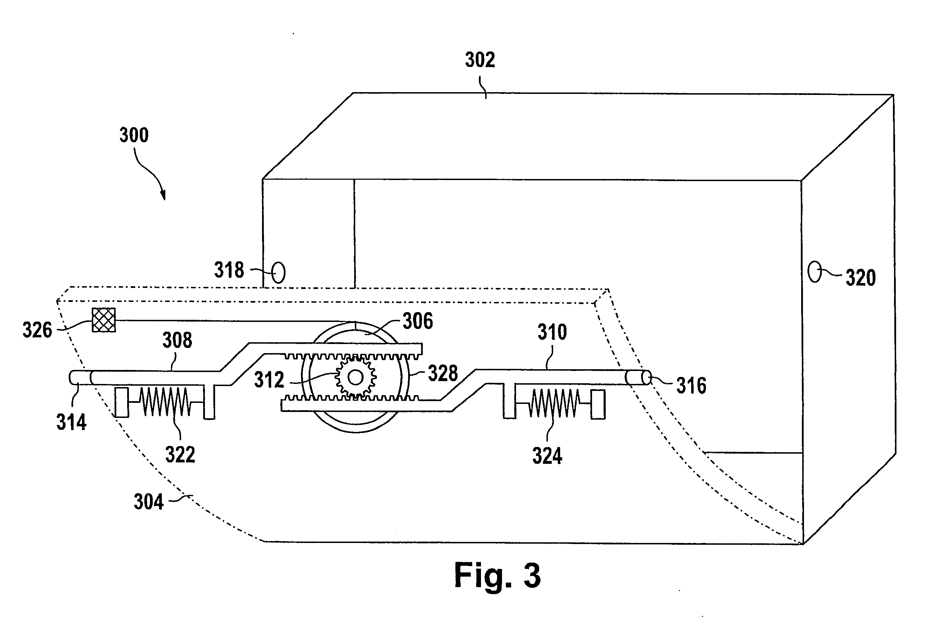

Fig. 3 zeigt schematisch einen Handschuhkasten 300 mit einem Handschuhkastengehäuse 302 und einen Handschuhkastendeckel 304. Im Deckel 304 sind ein Elektromagnet 306, zwei Zahnstangenelemente 308 und 310 sowie ein Zahnrad 312 angeordnet. An jeweils einem Ende der Zahnstangenelemente 308 und 310 sind Arretierelemente 314 und 316 fixiert. Ferner wird jedes Zahnstangenelement 308 bzw. 310 von einer Feder 322 bzw. 324 beaufschlagt, so dass sich die Zahnstangenelemente bei unbestromtem Elektromagnet 306 in einer Verriegelungsposition befinden. Dabei greifen die Arretierelemente 314 und 316 bei geschlossenem Handschuhkastendeckel 304 in entsprechende Aussparungen 318 und 320 im Handschuhkastengehäuse 302 ein. Der Elektromagnet lässt sich über einen Betätigungsschalter 326 aktivieren, wobei über eine hier nicht gezeigte elektrische Schaltung ein elektrischer Strom zur Erregung des Elektromagneten erzeugt wird. Aufgrund einer Erregung des Elektromagneten erfolgt eine Bewegung eines Ankers längs einer Längsbohrung des Elektromagneten (Hubmagnet), wobei das Zahnrad 312 so bewegt wird, dass die Zahnstangenelemente entgegen der Rückstellkräfte der Federn 322 und 324 bewegt werden, wobei die Arretierelemente 314 bzw. 316 aus einer Verriegelungsposition in eine Entriegelungsposition bewegbar sind. Dabei wird der Elektromagnet 306 vom elektrischen Strom während eines ersten Zeitraums bestromt. Nach Ablauf des ersten Zeitraums wird erfindungsgemäß der elektrische Strom nicht abrupt abgeschaltet, sondern während eines zweiten Zeitraums stetig verringert. Dies hat zur Folge, dass die Arretierelemente 314 bzw. 316 bzw. die Zahnstangenelemente 308 und 310 nicht in die Verriegelungsposition zurückkatapultiert werden. Vielmehr werden aufgrund des mit der langsamen Verminderung des Stromes einhergehenden langsamen Abbaus des Magnetfelds die Zahnstangenelemente und Arretierelemente nur langsam in die Verriegelungsposition zurückgehen, wodurch auch Geräusche die durch das Zurückgehen bzw. das Erreichen der Verriegelungsposition erzeugt werden, verhindert werden. Entsprechend kann der elektrische Strom zur Erregung des Elektromagneten nicht abrupt angeschaltet werden, sondern er wird über einen dritten Zeitraum allmählich erhöht. Dies hat zur Folge, dass die Zahnstangen- und Arretierelemente nicht abrupt aus der Verriegelungsposition in die Entriegelungsposition gebracht werden, sondern allmählich. Dadurch werden auch bei der Entriegelung des Staufachs entstehende Geräusche vermieden.

Nach dem Stand der Technik werden zudem bevorzugterweise anstatt eines Elektromagneten Elektromotoren zum Betreiben der Zahnstangenelemente verwendet. Elektromotoren haben jedoch die unangenehme Eigenschaft, dass sie bei ihrem Betrieb Geräusche in einem Frequenzbereich zwischen 1 und 3 kHz verursachen. Dies ist für einen Menschen ein relativ unangenehm zu hörender Frequenzbereich. Elektromagnete hingegen erzeugen Geräusche in einem Bereich von etwa 500 Hz. Diese Geräusche sind aber deutlich angenehmer zu hören als Geräusche im Bereich zwischen 1 und 3 kHz. Durch die Verwendung von Elektromagneten anstatt von Elektromotoren wird somit ein Handschuhkasten realisiert, bei dem die zum Öffnen und Verschließen auftretenden Geräusche für einen Insassen deutlich angenehmer anzuhören sind.

Darüber hinaus kann der Elektromagnet 306 von Schaltdämpfungsmitteln 328, wie etwa Schaumstoff aus PE oder anderem schallabsorbierendem Material, eingefasst sein, so dass betriebsbedingte Geräusche des Elektromagneten 306 nicht bzw. nur in geringerem Maße nach außen dringen können.

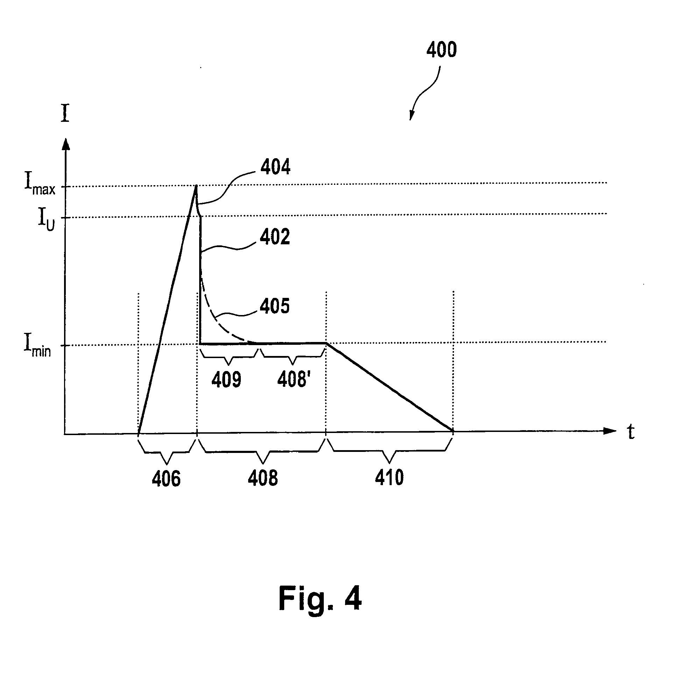

Figur 4 zeigt einen Graph 400, in dem ein Verlauf einer berechneten Stromansteuerungskurve 402 gezeigt ist. Die Abszisse bezieht sich dabei auf die Zeit t, während sich die Ordinate auf die Stromstärke I bezieht. Die Stromansteuerungskurve gibt also den zeitlichen Verlauf der Stromstärke I(t) des zur Bestromung des Elektromagneten verwendeten Stromes wieder. Erfindungsgemäß wird die Stromstärke I(t) der Stromansteuerungskurve 402 während eines ersten Zeitraums 406 von Null in einem linearen Verlauf auf eine Stromstärke Imax erhöht. Dabei erfolgt die Erhöhung der Stromstärke genau so lang, bis ein spontaner Abfall 404 der Stromstärke auf die Stromstärke IU detektiert wird. Ein solcher spontaner Abfall der Stromstärke hat seine Ursache in einem spontanen Einsetzen der Bewegung des Ankers in dem Elektromagneten, welcher durch die Stromansteuerungskurve 402 bestromt wird. Sobald dieser Stromabfall 404 detektiert wird, erfolgt eine Reduzierung des zur Bestromung des Elektromagneten verwendeten Stromes auf den Wert Imin. Dabei bestimmt sich dieser Wert Imin in dem Verhältnis zwischen Imax und IU. Imin ist dabei in einer Tabelle zugehörig zu diesem Verhältnis zwischen Imax und IU hinterlegt und dabei genau so optimiert, dass der Anker eines Elektromagneten entgegen der Rückstellkraft der Feder, welche den Anker aus dem Elektromagneten herausdrückt, genau gleich groß ist. Somit verharrt der Anker über den zweiten Zeitraum 408 in einer Position, in welcher eine Handschuhkasten-Entriegelung vorliegt. Während des dritten Zeitraums 410 wird anschließend nach dem zweiten Zeitraum 408 der Stromverlauf linear von dem Wert Imin auf Null abgesenkt. Diese Absenkung führt dabei wiederum zu einer Rückführung des Ankers in die Verriegelungsposition.

Im vorliegenden Fall der Figur 4 wird davon ausgegangen, dass der Zeitraum zwischen dem Abfallen des Stroms von Imax auf IU und den daraufhin einsetzenden Absenken des Stromes auf Imin ausreichend ist, um den Anker so weit in den Elektromagneten hineinzubewegen, dass eine Entriegelungsposition für den Handschuhkasten erreicht wird. Ist jedoch die mechanische Reaktion des Ankers im Elektromagneten zu träge, so kann über einen Zeitraum 409, welcher innerhalb des Zeitraums 408 liegt und direkt an den Zeitraum 406 anschließt, ein stetiges bzw. exponentiell abfallendes Reduzieren des Stroms von IU auf Imin verwendet werden. Dies ist in der Figur 4 durch die gestrichelte Kurve 405 dargestellt. Die gestrichelte Stromkurve 405 in der Figur 4 hat zur Folge, dass nach der spontanen ruckartigen Inbewegungsetzung des Ankers nach Unterschreiten der Maximalspannung Imax auf die Spannung IU der Anker weiterhin kontrolliert über den Zeitraum 409 in den Elektromagneten hineingezogen wird. Somit kann durch gezielte Vorgabe des Zeitraums 409 eine beliebige Position des Ankers bezüglich des Elektromagneten erzielt werden. Somit es möglich, den Anker so weit aus dem Anschlag, der die Entriegelungsposition des Handschuhkastendeckels bestimmt, herauszuziehen, um anschließend den Anker während des Zeitraums 408' in dieser Entriegelungsposition zu halten. Damit setzt sich in der Figur 4 der zweite Zeitraum 408 durch den Abklingzeitraum 409 und den Zeitraum 408' zusammen.

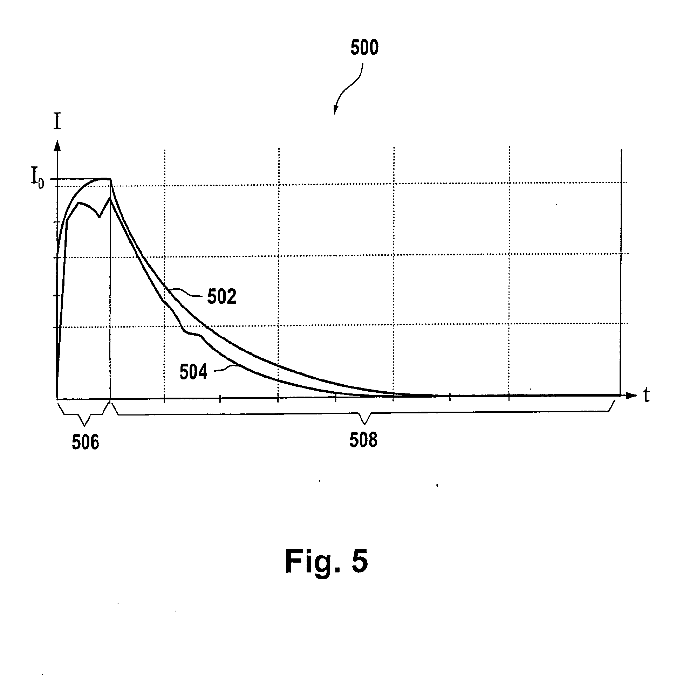

Die Figur 5 zeigt einen weiteren Graph 500, in dem Verläufe einer berechneten Stromansteuerungskurve 502 und einer dazu entsprechenden gemessenen Stromansteuerungskurve 504 dargestellt sind. Die Abszisse bezieht sich dabei ebenso wie in der Figur 4 auf die Zeit t, während sich die Ordinate auf die Stromstärke I bezieht. Die Stromansteuerungskurve gibt also den zeitlichen Verlauf der Stromstärke I(t) des zur Bestromung des Elektromagneten verwendeten Stromes wieder. Im Unterschied zu der Figur 4 wird in der Figur 5 keine Messung der Stromstärke vorgenommen, wobei es jedoch dennoch möglich ist, den Anker und das Arretierelement geräuschlos durch den Elektromagneten von der Verriegelungsposition in die Entriegelungsposition und wieder zurückzubewegen. Allerdings besteht hierbei der Nachteil, dass die mechanischen Belastungen auf die mechanischen Komponenten Elektromagnet, Feder, Anker und Arretierelement wesentlich höher sind. Außerdem ist damit keine Positionskontrolle für die aktuelle Position des Ankers in Bezug auf den Elektromagneten möglich, sodass hier zum Beispiel Hall-Sensoren zur Positionsdetektion eingesetzt werden müssen.

Im Falle der Figur 5 wird eine Stromansteuerungskurve 502 während eines ersten Zeitraums 506 von 0 in einem exponentiellen Verlauf auf eine Stromstärke 10 erhöht, und dann in einem exponentiellen Verlauf während des dritten Zeitraums 508 auf 0 abgesenkt. Dabei wird davon ausgegangen, dass in ausreichender Weise eine Entriegelungszeit des Handschuhkastendeckels gewährleistet ist. Dies kann zum Beispiel dadurch gegeben sein, dass eine Entriegelung des Handschuhkastendeckels bereits mit zwei Drittel 10 realisiert werden kann, womit das zusätzliche ein Drittel 10, das an den Elektromagneten angeregt wird, lediglich zum Halten des Ankers in der Entriegelungsposition dient.

In der Figur 5 ebenfalls gezeigt ist eine gemessene Stromansteuerungskurve 504, welche mit externen Messgeräten gemessen wurde und welche im Wesentlichen den Verlauf der berechneten Stromansteuerungskurve 502 wiedergibt. Allerdings ist in der gemessenen Kurve auch der vom Anker in den Spulen des Elektromagneten induzierte Strom miterfasst, welcher in der Figur 4 dazu verwendet wird, um ein sich in Bewegung setzen des Ankers zu detektieren. Dies erklärt schließlich die Schwankungen der gemessenen Stromansteuerungskurve 504 im Zeitsegment 506.

Die Stromstärke 10 sowie die optimalen Werte für den ersten und dritten Zeitraum 506 und 508 hängen dabei vom verwendeten Elektromagneten ab.

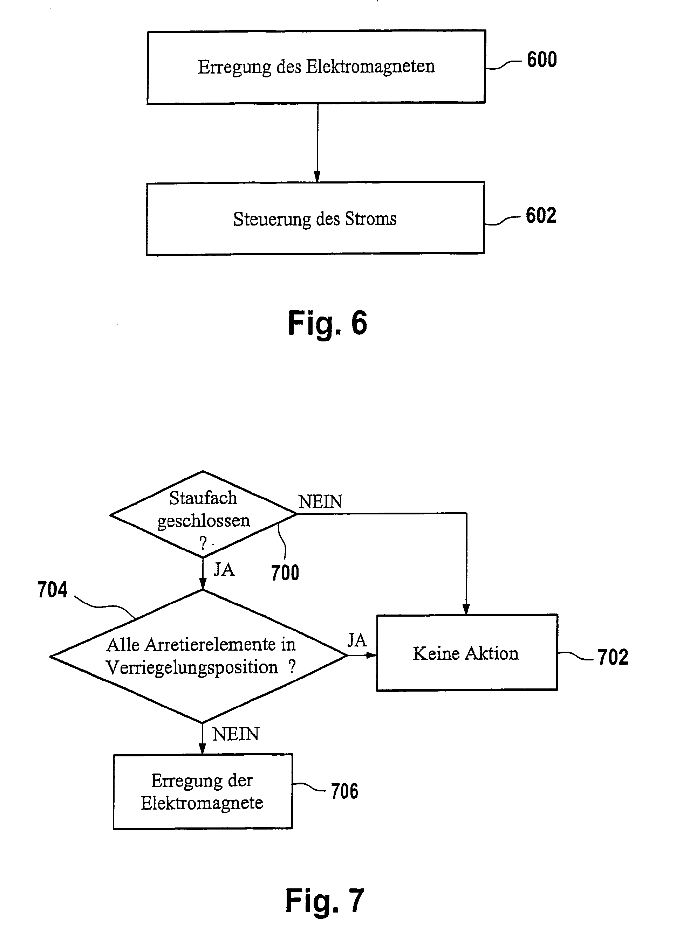

Die Figur 6 zeigt ein Flussdiagramm, in dem Schritte des erfindungsgemäßen Verfahrens zum Entriegeln eines Staufachs angegeben sind. In Schritt 600 erfolgt die Erregung eines Elektromagneten mit einem elektrischen Strom, wobei der Elektromagnet einen Anker aufweist, wobei der Anker des Elektromagneten mit einem oder mehreren Arretierelementen gekoppelt ist, wobei jedes Arretierelement bei unbestromtem Elektromagneten aufgrund einer Rückstellkraft einer Feder bei geschlossenem Staufach eine Verriegelungsposition durch Eingriff in Aussparungen im Staufach einnimmt, wobei durch die Erregung des Elektromagnets mit dem elektrischen Strom die Arretierelemente in eine Entriegelungsposition bewegt werden. Ferner folgt in Schritt 602 die Steuerung des elektrischen Stromes so, dass nach Einschalten des Stromes nach Messung des Erreichens eines Maximalstromes und anschließendem Unterschreiten dieses Maximalstroms der Strom auf einen vorgegebenen Minimalwert des Stroms reduziert wird.

Praktisch kann dies beispielsweise dadurch realisiert sein, dass über einen ersten Zeitraum kontinuierlich und stetig eine an den Elektromagneten angelegte elektrische Spannung erhöht wird. Dabei wird mit der Erhöhung der Spannung gleichzeitig der elektrische Stromfluss durch den Elektromagneten gemessen. In dem Augenblick, wenn der elektrische Stromfluss ein Maximum durchläuft und anschließend wieder abfällt, wird daraufhin die elektrische Spannung so reduziert, dass der vorgegebene Minimalwert des Stromflusses erreicht wird.

Fig. 7 zeigt ein Flussdiagramm, in dem Schritte des erfindungsgemäßen Verfahrens dargestellt sind. In Schritt 700 wird detektiert, ob das Staufach geschlossen ist. Falls dies nicht der Fall ist, wird das Verfahren mit Schritt 702 fortgesetzt, wobei keine weitere Aktion folgt. Falls in Schritt 700 detektiert wird, dass das Staufach geschlossen ist, wird das Verfahren mit Schritt 704 fortgesetzt. In Schritt 704 wird detektiert, ob bei verschlossenem Staufach jedes Arretierelement seine Verriegelungsposition einnimmt. Ist dies nicht der Fall, so wird das Verfahren mit Schritt 706 fortgesetzt. In Schritt 706 erfolgt eine Erregung der Elektromagnete, wobei wie oben beschrieben das Staufach entriegelt wird und somit geöffnet wird. Dies kann als Aufforderung für einen Kraftfahrzeug-Insassen verstanden werden, das Staufach ordnungsgemäß zu verschließen. Falls in Schritt 704 detektiert wird, dass alle Arretierelemente in Verriegelungsposition sind, wird das Verfahren mit Schritt 702 fortgesetzt, wobei keine weitere Aktion erfolgt.

### Bezugszeichenliste

- 100: Handschuhkasten
- 102: Gehäuse
- 104: Deckel
- 106: Elektromagnet
- 108: Elektromagnet
- 110: Anker
- 112: Anker
- 114: Arretierelement
- 116: Arretierelement
- 118: Feder
- 120: Feder
- 122: Aussparungen
- 124: Aussparungen
- 126: Betätigungsschalter
- 128: elektrische Schaltung
- 129: Mittel zur Strommessung
- 130: Hall-Sensor
- 131: Speicher
- 132: Hall-Sensor
- 133: Prozessor
- 134: Hall-Sensor
- 136: Magnet
- 200: Elektromagnet
- 202: Anker
- 204: Arretierelement
- 206: Feder
- 208: Dämpfungsmittel
- 210: Längsbohrung
- 212: Magnetgehäuse
- 300: Handschuhkasten
- 302: Gehäuse
- 304: Deckel
- 306: Elektromagnet
- 308: Zahnstangenelement
- 310: Zahnstangenelement
- 312: Zahnrad
- 314: Arretierelement
- 316: Arretierelement
- 318: Aussparung
- 320: Aussparung
- 322: Feder
- 324: Feder
- 326: Betätigungsschalter
- 328: Schalldämpfungsmittel
- 400: Graph
- 402: Stromansteuerungskurve
- 404: Abfall all
- 405: Stromansteuerungskurve
- 406: erster Zeitraum
- 408: zweiter Zeitraum
- 409: Zeitraum
- 410: dritter Zeitraum
- 500: Graph
- 502: berechnete Stromansteuerungskurve
- 504: gemessene Stromansteuerungskurve
- 506: erster Zeitraum
- 508: dritter Zeitraum

## Patentansprüche

1. Verschluss für ein Staufach (100) eines Kraftfahrzeugs mit:
- mindestens einem Elektromagneten (106, 108), wobei der mindestens eine Elektromagnet einen Anker (110, 112) aufweist, wobei der Anker durch Erregung des Elektromagneten bewegbar ist, wobei eine Bewegung des Ankers auf mindestens ein Arretierelement (114, 116) übertragbar ist, wobei sich das mindestens eine Arretierelement aufgrund einer Rückstellkraft einer Feder (118, 120) bei unbestromtem Elektromagneten in einer Verrieglungsposition für das Staufach befindet,
- Mitteln (128) zur Erzeugung eines elektrischen Stroms zur Erregung des Elektromagneten,
- Mittel (129) zur Messung des zur Erregung des Elektromagneten verwendeten elektrischen Stromflusses, wobei die Mittel zur Erzeugung des Stroms dazu ausgebildet sind, den elektrischen Strom so zu steuern, dass nach Einschalten des Stroms nach Messung des Erreichens eines Maximalstromes und anschließendem Unterschreiten dieses Maximalstroms der Strom auf einen vorgegebenen Minimalwert reduziert wird, wobei der Minimalwert so dimensioniert ist, dass ein Halten des Ankers in seiner Position entgegen der auf den Anker wirkenden Federkraft erfolgt.

2. Verschluss nach Anspruch 1, wobei der elektrische Strom zur Erregung des Elektromagneten so steuerbar ist, dass der elektrische Strom über einen ersten (406; 506) Zeitraum bis zum Erreichen des gemessenen Maximalstromes stetig steigerbar ist.

3. Verschluss nach Anschluss 1 oder 2, wobei der Strom auf den vorgegebenen Minimalwert für einen zweiten Zeitraum (408) reduzierbar ist, wobei sich das Arretierelement über den zweiten Zeitraum hinweg in einer Entriegelungsposition für das Staufach befindet.

4. Verschluss nach einem der vorigen Ansprüche, wobei der elektrische Strom nach Ablauf des zweiten Zeitraums so steuerbar ist, dass er über einen dritten Zeitraum (410) stetig verringert wird.

5. Verschluss nach einem der vorigen Ansprüche, ferner mit Mitteln zur Bestimmung des vorgegebenen Minimalwerts des Stroms, wobei der Minimalwert des Stroms durch das Verhältnis zwischen dem gemessenen Maximalstrom und dem gemessenen Wert des Unterschreitens des Maximalstroms abhängt.

6. Verschluss nach einem der vorhergehenden Ansprüche, wobei der Verschluss einen Sensor (132, 134) für jeden der mindestens einen Elektromagneten aufweist, wobei mit dem Sensor detektierbar ist, ob sich der Anker des Elektromagneten in einer Position befindet, die der Verriegelungsposition des entsprechenden Arretierelements entspricht.

7. Verschluss nach einem der Ansprüche 1 bis 6, wobei der Verschluss einen Elektromagneten (306), zwei Zahnstangenelemente (308, 310) und ein Zahnrad (312) aufweist, wobei jeweils ein Arretierelement (314, 316) an einem Ende jedes Zahnstangenelements bewegbar ist, wobei das Zahnrad vom Anker des Elektromagneten bewegbar ist, wobei eine Bewegung des Zahnrads auf die Zahnstangenelemente übertragbar ist, wobei durch die Bewegung die Arretierelemente von der Verriegelungsposition in die Entriegelungsposition bewegbar sind.

8. Verschluss nach einem der Ansprüche 1 bis 6, wobei der Verschluss einen Elektromagneten (306), zwei Zahnstangenelemente (308, 310) und ein Zahnrad (312) aufweist, wobei jeweils ein Arretierelement (314, 316) an einem Ende jedes Zahnstangenelements bewegbar ist, wobei eines der Zahnstangenelemente (308, 310) vom Anker des Elektromagneten bewegbar ist, wobei eine Bewegung dieses Zahnstangenelements (308, 310) auf das weitere Zahnstangenelement durch das Zahnrad übertragbar ist, wobei durch die Bewegung die Arretierelemente von der Verriegelungsposition in die Entriegelungsposition bewegbar sind.

9. Staufach für ein Kraftfahrzeug mit einem Verschluss nach einem der vorhergehenden Ansprüche 1 bis 8.

10. Staufach nach Anspruch 9, wobei das Staufach ein Staufachgehäuse und einen Deckel umfasst, wobei entweder das Staufachgehäuse oder der Deckel den Verschluss aufweist.

11. Staufach nach Anspruch 10, wobei das Staufachgehäuse oder der Deckel mindestens eine Aussparung aufweist, wobei jeweils eine Aussparung komplementär zu einem Arretierelement angeordnet ist, wobei durch Eingreifen des Arretierelements in die Aussparung der Staufachdeckel verriegelbar ist.

12. Staufach nach Anspruch 11, wobei das Staufach ferner ein Sensorsystem aufweist, wobei mittels des Sensorsystems ermittelbar ist, ob der Staufachdeckel geöffnet oder geschlossen ist.

13. Staufach nach einem der Ansprüche 9 bis 12, wobei es sich bei dem Staufach um einen Handschuhkasten handelt.

14. Verfahren zum Entriegeln eines Staufachs (100), wobei das Verfahren die folgenden Schritte aufweist:
- Erregung von einem Elektromagneten (106, 108) mit einem elektrischen Strom, wobei der Elektromagnet einen Anker (110, 112) aufweist, wobei der Anker des Elektromagneten mit einem oder mehreren Arretierelementen (114, 116) gekoppelt ist, wobei jedes Arretierelement bei unbestromtem Elektromagneten aufgrund einer Rückstell-
- kraft einer Feder bei geschlossenem Staufach eine Verriegelungsposition durch Eingriff in Aussparungen im Staufach einnimmt, wobei durch die Erregung des Elektromagnets mit dem elektrischen Strom die Arretierelemente in eine Entriegelungsposition bewegt werden,
- Steuerung des elektrischen Stroms so, dass nach Einschalten des Stroms nach Messung des Erreichens eines Maximalstromes und anschließendem Unterschreiten dieses Maximalstroms der Strom auf einen vorgegebenen Minimalwert des Stromes reduziert wird, wobei der Minimalwert so dimensioniert ist, dass ein Halten des Ankers in seiner Position entgegen der auf den Anker wirkenden Federkraft erfolgt.

15. Verfahren nach Anspruch 14, ferner mit den Schritten:
- Detektion, ob das Staufach geschlossen ist,
- Detektion, ob bei verschlossenem Staufach jedes Arretierelement die Verriegelungsposition einnimmt,
- Erregung der Elektromagnete mit dem elektrischen Strom, falls mit dem Sensorsystem detektiert wird, dass das Staufach geschlossen ist und mindestens ein Arretierelement nicht die Verriegelungsposition einnimmt.

## Claims

1. Closure for a storage compartment (100) of a motor vehicle, comprising:
- at least one solenoid (106, 108), wherein the at least one solenoid comprises an armature (110, 112), wherein the armature can be moved by excitation of the solenoid, wherein a movement of the armature can be transmitted to at least one locking element (114, 116), wherein the at least one locking element is in a locking position for the storage compartment as a result of a restoring force of a spring (118, 120) when the solenoid is not energized;
- means (128) for generating an electrical current for excitation of the solenoid; and
- means (129) for measuring the electrical current used to excite the solenoid, wherein the means for generating the current are designed to control the electrical current such that, after the current is activated, the current is reduced to a predetermined minimum value after it is measured that a maximum current has been achieved and subsequently a drop below this maximum current occurs, wherein the minimum value is such that the armature is stopped in the position thereof against the spring force acting on the armature.

2. The closure according to claim 1, wherein the electrical current for excitation of the solenoid can be controlled such that the electrical current can be steadily increased over a first (406; 506) time period until the measured maximum current is reached.

3. The closure according to claim 1 or 2, wherein the current can be reduced to the predetermined minimum value for a second (408) time period, wherein the locking element is in an unlocking position for the storage compartment over the second time period.

4. A closure according to any one of preceding claims, wherein, after the second time period has lapsed, the electrical current can be controlled such that it is steadily decreased over a third time period (410).

5. A closure according to any one of the preceding claims, further comprising means for determining the predetermined minimum value of the current, wherein the minimum value of the current depends on the relationship between the measured maximum current and the measured value of the drop below the maximum current.

6. A closure according to any one of the preceding claims, wherein the closure comprises a sensor (132, 134) for each of the at least one solenoid, wherein the sensor can be used to detect whether the armature of the solenoid is in a position which corresponds to the locking position of the corresponding locking element.

7. A closure according to any one of claims 1 to 6, wherein the closure comprises a solenoid (306), two toothed rack elements (308, 310), and a gearwheel (312), wherein in each case a locking element (314, 316) at an end of each toothed rack element can be moved, wherein the gear wheel can be moved by the armature of the solenoid, wherein a movement of the gear wheel can be transmitted to the toothed rack elements, wherein the locking elements can be moved from the locking position into the unlocking position as a result of the movement.

8. A closure according to any one of claims 1 to 6, wherein the closure comprises a solenoid (306), two toothed rack elements (308, 310), and a gear wheel (312), wherein in each case a locking element (314, 316) at an end of each toothed rack element can be moved, wherein one of the toothed rack elements (308, 310) can be moved by the armature of the solenoid, wherein a movement of this toothed rack element (308, 310) can be transmitted to the further toothed rack element by the gear wheel, wherein the locking elements can be moved from the locking position into the unlocking position as a result of the movement.

9. A storage compartment for a motor vehicle, comprising a closure according to any one of the preceding claims 1 to 8.

10. The storage compartment according to claim 9, wherein the storage compartment comprises a storage compartment housing and a cover, wherein either the storage compartment housing or the cover comprises the closure.

11. The storage compartment according to claim 10, wherein the storage compartment housing or the cover has at least one recess, wherein in each case a recess is arranged in a complementary manner to a locking element, wherein the storage compartment cover can be locked by engagement of the locking element in the recess.

12. The storage compartment according to claim 11, wherein the storage compartment further comprises a sensor system, wherein the sensor system can be used to determine whether the storage compartment cover is open or closed.

13. A storage compartment according to any one of claims 9 to 12, wherein the storage compartment is a glove compartment.

14. A method for unlocking a storage compartment (100), comprising the following steps:
- exciting a solenoid (106, 108) by way of an electrical current, wherein the solenoid comprises an armature (110, 112), wherein the armature of the solenoid is coupled to one or more locking elements (114, 116), wherein each locking element, when the storage compartment is closed, assumes a locking position by engagement in recesses in the storage compartment when the solenoid is not energized as a result of a restoring force of a spring, wherein the locking elements can be moved into an unlocking position by excitation of the solenoid with the electrical current; and
- controlling the electrical current such that, after the current is activated, the current is reduced to a predetermined minimum value of the current after it is measured that a maximum current has been achieved and subsequently a drop below this maximum current occurs, wherein the minimum value is such that the armature is stopped in the position thereof against the spring force acting on the armature.

15. The method according to claim 14, further comprising the following steps:
- detecting whether the storage compartment is closed;
- detecting whether each locking element assumes the locking position when the storage compartment is closed; and
- exciting the solenoids by way of the electrical current if the sensor system detects that the storage compartment is closed and at least one locking element does not assume the locking position.

## Revendications

1. Fermeture pour un compartiment de stockage (100) d'un véhicule à moteur, comprenant :
- au moins un solénoïde (106, 108), le au moins un solénoïde comprenant une armature (110, 112), l'armature pouvant être déplacée par excitation du solénoïde, un mouvement de l'armature pouvant être transmis à au moins un élément de verrouillage (114, 116), le au moins un élément de verrouillage étant dans une position de verrouillage pour le compartiment de stockage en conséquence d'une force de restauration d'un ressort (118, 120) lorsque le solénoïde n'est pas excité ;
- des moyens (128) pour générer un courant électrique pour l'excitation du solénoïde ; et
- des moyens (129) pour mesurer le courant électrique utilisé pour exciter le solénoïde, les moyens pour générer le courant étant mis au point pour contrôler le courant électrique de telle sorte qu'après que le courant est activé, le courant est réduit à une valeur minimale prédéterminée après qu'il est mesuré qu'un courant maximal a été obtenu et que par la suite une chute au-dessous de ce courant maximal se produit, la valeur minimale étant telle que l'armature est stoppée dans la position de celle-ci à l'encontre de la force du ressort agissant sur l'armature.

2. Fermeture selon la revendication 1, dans laquelle le courant électrique pour l'excitation du solénoïde peut être contrôlé de telle sorte que le courant électrique peut être augmenté de façon constante sur une première (406 ; 506) période de temps jusqu'à ce que le courant maximal mesuré soit atteint.

3. Fermeture selon l'une des revendications 1 ou 2, dans laquelle le courant peut être réduit à la valeur minimale prédéterminée pendant une seconde (408) période de temps, l'élément de verrouillage étant dans une position de déverrouillage pour le compartiment de stockage sur la seconde période de temps.

4. Fermeture selon l'une quelconque des revendications précédentes, dans laquelle, après que la seconde période de temps est écoulée, le courant électrique peut être contrôlé de telle sorte qu'il est diminué de façon constante sur une troisième période de temps (410).

5. Fermeture selon l'une quelconque des revendications précédentes, comprenant en outre des moyens pour déterminer la valeur minimale prédéterminée du courant, la valeur minimale du courant dépendant de la relation entre le courant maximal mesuré et la valeur mesurée de la chute au-dessous du courant maximal.

6. Fermeture selon l'une quelconque des revendications précédentes, dans laquelle la fermeture comprend un détecteur (132, 134) pour chacun parmi le au moins un solénoïde, le détecteur pouvant être utilisé pour détecter si l'armature du solénoïde se trouve dans une position qui correspond à la position de verrouillage de l'élément de verrouillage correspondant.

7. Fermeture selon l'une quelconque des revendications 1 à 6, dans laquelle la fermeture comprend un solénoïde (306), deux éléments de crémaillère (308, 310) et une roue dentée (312), où dans chaque cas un élément de verrouillage (314, 316) à une extrémité de chaque élément de crémaillère peut être déplacé, la roue dentée pouvant être déplacée par l'armature du solénoïde, un mouvement de la roue dentée pouvant être transmis aux éléments de crémaillère, les éléments de verrouillage pouvant être déplacés de la position de verrouillage dans la position de déverrouillage en conséquence du mouvement.

8. Fermeture selon l'une quelconque des revendications 1 à 6, dans laquelle la fermeture comprend un solénoïde (306), deux éléments de crémaillère (308, 310) et une roue dentée (312), où dans chaque cas un élément de verrouillage (314, 316) à une extrémité de chaque élément de crémaillère peut être déplacé, l'un des éléments de crémaillère (308, 310) pouvant être déplacé par l'armature du solénoïde, un mouvement de cet élément de crémaillère (308, 310) pouvant être transmis à l'autre élément de crémaillère par la roue dentée, les éléments de verrouillage pouvant être déplacés de la position de verrouillage dans la position de déverrouillage en conséquence du mouvement.

9. Compartiment de stockage pour un véhicule à moteur, comprenant une fermeture selon l'une quelconque des revendications précédentes 1 à 8.

10. Compartiment de stockage selon la revendication 9, dans lequel le compartiment de stockage comprend un corps de compartiment de stockage et un couvercle, où soit le corps de compartiment de stockage soit le couvercle comprend la fermeture.

11. Compartiment de stockage selon la revendication 10, dans lequel le corps de compartiment de stockage ou le couvercle a au moins une cavité, où dans chaque cas, une cavité est disposée d'une marnière complémentaire à un élément de verrouillage, le couvercle de compartiment de stockage pouvant être verrouillé par engagement de l'élément de verrouillage dans la cavité.

12. Compartiment de stockage selon la revendication 11, dans lequel le compartiment de stockage comprend en outre un système détecteur, le système détecteur pouvant être utilisé pour déterminer si le couvercle de compartiment de stockage est ouvert ou fermé.

13. Compartiment de stockage selon l'une quelconque des revendications 9 à 12, dans lequel le compartiment de stockage est une boîte à gants.

14. Procédé de déverrouillage d'un compartiment de stockage (100), comprenant les étapes suivantes :
- exciter un solénoïde (106, 108) au moyen d'un courant électrique, le solénoïde comprenant une armature (110, 112), l'armature du solénoïde étant couplée à un ou plusieurs éléments de verrouillage (114, 116), chaque élément de verrouillage, lorsque le compartiment de stockage est fermé, adoptant une position de verrouillage par engagement dans des cavités dans le compartiment de stockage lorsque le solénoïde n'est pas excité en conséquence d'une force de restauration d'un ressort, les éléments de verrouillage pouvant être déplacés dans une position de déverrouillage par excitation du solénoïde avec le courant électrique ; et
- contrôler le courant électrique de telle sorte qu'après que le courant est activé, le courant est réduit à une valeur minimale prédéterminée du courant après qu'il est mesuré qu'un courant maximal a été obtenu et que par la suite une chute au-dessous de ce courant maximal se produit, la valeur minimale étant telle que l'armature est stoppée dans la position de celle-ci à l'encontre de la force du ressort agissant sur l'armature.

15. Procédé selon la revendication 14, comprenant en outre les étapes suivantes :
- détecter si le compartiment de stockage est fermé ;
- détecter si chaque élément de verrouillage adopte la position de verrouillage lorsque le compartiment de stockage est fermé ; et
- exciter les solénoïdes au moyen du courant électrique si le système détecteur détecte que le compartiment de stockage est fermé et qu'au moins un élément de verrouillage n'adopte pas la position de verrouillage.
